# EUROPÄISCHE PATENTANMELDUNG

(11) **EP 0 581 064 A1**
(43) Veröffentlichungstag der Anmeldung: **02.02.1994**
(21) Anmeldenummer: 93110839.3
(22) Anmeldetag: 06.07.1993
(51) Int. Cl.: H02G 9/06, H02G 3/04, G02B 6/44

(54) **Kabelschutzrohr**

(30) Priorität: 27.07.1992 DE 4224743
(71) Anmelder: Drossbach GmbH & Co. KG, D-86641 Rain (DE)
(72) Erfinder: Dietrich, Karl, D-86641 Rain am Lech (DE)
(74) Vertreter: Meyer, Ludgerus A., Dipl.-Ing.

(57) **Zusammenfassung**

Es wird ein Kabelschutzrohr zur Aufnahme von kunststoffummantelten Kabeln oder Lichtleitern angegeben, das aus HD-Polyethylen bestehend eine innenseitige Querprofilierung aufweist. Erfindungsgemäß ist vorgesehen, daß das in Längsrichtung steife und im wesentlichen geradzylindrische Kunststoffrohr eine innere Rippenhöhe von 0,2 bis 2 mm aufweist und das Rohr (2) durch ein äußeres zweites Wellrohr (3) umfaßt ist. Das erfindungsgemäße Rohr weist den Vorteil auf, daß es ohne Verwendung eines Gleitmittels eine Einzugs-Widerstandsverringerung von bis zu 25% ermöglicht.

## Beschreibung

Die Erfindung bezieht sich auf ein Kabelschutzrohr nach dem Oberbegriff des Anspruchs 1.

Es ist heute üblich, zur Verlegung von langen Kabelstrecken Kabelschutzrohre zu verwenden, die in den Boden eingepflügt werden. Die Kabel selbst werden im Anschluß an die Verlegung des Kabelschutzrohres über eine Strecke von mehreren hundert Metern in das verlegte Kabelschutzrohr, insbesondere durch Druckluft, eingezogen. Hierbei ist es erwünscht, möglichst lange Streckenabschnitte verwenden zu könen, da es an jedem Ende eines Streckenabschnittes erforderlich ist, die eingezogenen Kabelabschnitte miteinander zu kuppeln. Insbesondere bei der Verlegung von Lichtleitern sind derartige Kupplungsstücke jedoch störend und dämpfen das übertragende Signal in erheblicher Weise. Lichtleiter-Kupplungsstücke sind ferner sehr kostenaufwendig und schwierig in der Handhabung.

Eine Verlängerung der Streckenabschnitte ist dadurch begrenzt, daß die Innenseite des verlegten Kabelschutzrohres gegenüber dem einzuziehenden Kabel eine nicht zu vernachlässigende Reibung aufweist. Das Einziehen der Kabel mittels Druckluft ist daher durch die maximale Zugfestigkeit des Kabels in der Weise beschränkt, daß die im Kabelschutzrohr zu überwindende Reibung beim Einziehen des Kabels nicht die maximale Zugfestigkeit des Kabels überschreiten darf.

Es sind daher Versuche unternommen worden, die Reibung des einzuziehenden Kabels im Kabelschutzrohr zu verringern. Aus der EP 221 481 ist ein Kabelschutzrohr zur Aufnahme von Einzügen bekannt geworden, das auf seiner Innenwandung mit einem Gleitmittel versehen ist, das in einer in die Innenwandung des Rohres eingebrachten Profilierung haftet. Das Gleitmittel wird dabei im Überfluß in eines der beiden Enden des Rohres eingefüllt und mit einem druckluftbeaufschlagten Treiborgan durch das Rohr, dessen Innenwand fortschreitend rundumbenetzend, hindurchgetrieben.

Es hat sich in der Praxis gezeigt, daß die Innenreibung des Kunststoffrohres zwar zunächst verringert werden konnte, jedoch hat die Verwendung eines Gleitmittels den Nachteil, daß es nach dem Einziehen des Kabels nicht mehr möglich ist, das Kabel noch einmal zu verschieben oder zu ersetzen, da das verwendete Gleitmittel eine Klebung bewirkt und die Hattreibung nur durch Aufbringen einer erheblich höheren Kraft als die Einzugskraft überwunden werden kann, wodurch jedoch leicht die Festigkeitsgrenze des Kabels überschritten wird. Im übrigen erfordert das Verfahren den zusätzlichen Arbeitsschritt des Einbringens des Gleitmittels in das Rohr.

Aus der DE-OS 35 29 541 ist ein Einfach-Kabelführungsrohr aus Kunststoff zur Aufnahme kunststoffummantelter Nachrichtenkabel, insbesondere Lichtwellenleiter, bekannt. Das Kabelführungsrohr weist an seiner Mantelinnenseite eine Mehrzahl sich in Längsrichtung erstreckender Gleitrippen auf, deren Höhe wesentlich kleiner ist als die Wandstärke des Kabelführungsrohres. Dabei sind die Gleitrippen auf dem Umfang des Kabelführungsrohres gleichmäßig verteilt und in Längsrichtung gerade oder spiralförmig ausgebildet, wobei sie einen halbbogenförmigen Querschnitt aufweisen. In einem solchen Kabelschutzrohr ergibt sich eine relativ hohe Reibung, die überwunden werden muß, wenn ein Kabel eingezogen ist.

Aus der DE-OS 20 62 695 ist eine Vorrichtung zum Herstellen eines Kunststoffrohres mit Querrillen bekannt. Die dabei entstehenden Kunststoffrohre weisen ein Rippenprofil auf, das schraubenlinienförmig verläuft. Ein derartiges ausgebildetes einfaches Rohr mit der beschriebenen Profilierung der Rippen weist keinerlei Eigenschaften auf, die die Reibungskrafte vermindern würden, die beim Einzug eines Kabels entstehen. Die Längssteifigkeit eines solchen Rohres ist sehr gering.

Der Erfindung liegt die Aufgabe zugrunde, ein Kabelschutzrohr zur Aufnahme von Einzügen anzugeben, das ohne Verwendung eines Gleitmittels eine Reduzierung der innenseitigen Reibung des Schutzrohres ermöglicht.

Diese Aufgabe wird durch die im Anspruch 1 angegebene Erfindung gelöst. Vorteilhafte Weiterbildungen der Erfindung sind in Unteransprüchen angegeben.

Gemäß der Erfindung wird ein Kabelschutzrohr angegeben, das aus Kunststoff besteht und zur Aufnahme von kunststoffummantelten Kabeln oder Lichtleitern vorgesehen ist. Auf der Innenseite des Rohres ist eine Querprofilierung vorhanden. Das Rohr besteht aus HD-Polyethylen. Die Rippenhöhe der inneren Querprofilierung des in Längsrichtung steifen und im wesentlichen geradzylindrischen Rohres beträgt 0,2 bis 2 mm. Um das Rohr ist ein zweites äußeres Rohr gelegt, das als Wellrohr ausgebildet ist.

Das erfindungsgemäße Rohr benötigt kein Gleitmittel zur Verringerung des Reibwiderstandes beim Einzug von Kabeln, sondern die besondere Ausbildung der Innenseite des Rohres verringert durch die Materialpaarung zwischen Kunststoffrohr und kunststoffummanteltem Kabel eine Verringerung des Gleitwiderstandes. Das nachteilige Anbringen eines Gleitmittels ist hierbei nicht erforderlich.

Es wurde festgestellt, daß beim Einziehen des Kabels in ein erfindungsgemäßes Rohr durch eine hohe Einzugsgeschwindigkeit eine punktuelle Erweichung der Erhöhungen des Innenrohres stattfindet, so daß der diesbezügliche Reibwiderstand erheblich gesenkt werden konnte. Es wurden Reduzierungen des Widerstandes von bis 25% festgestellt. Dadurch ist es in erster Näherung möglich, die Einzugslänge eines Kabelabschnittes um 25% zu erhöhen.

In besonderer Ausgestaltung der Erfindung gemäß Unteranspruch 2 ist vorgesehen, daß die Wandstärke des Rohres in Längsrichtung wellenförmig variabel ausgebildet ist. Dadurch bleibt das Rohr in Längsrichtung steif. Bei einem reinen Wellrohr würde keine hohe Längssteifigkeit auftreten. Die Variation der Wandstärke kann während des Extrusionsvorganges durch kontinuierliches Variieren des Volumenstroms des Extrusionskopfes oder auch durch Variation des Düsenaustrittsspaltes erzielt werden.

Der axiale Wellenabstand der Rippen beim Innenrohr entspricht gemäß Unteranspruch 3 vorzugsweise dem axialen Wellenabstand beim Außenrohres. Dadurch kann gemäß Unteranspruch 4 oder 5 alternativ ein nach innen gerichteter Wellenberg des Innenrohres mit einem nach innen oder einem nach außen gerichteten Wellenberg des äußeren Rohres zusammenfallen.

Vorzugsweise wird gemäß Unteranspruch 7 das zweischichtig aufgebaute Kabelschutzrohr noch mit einem weiteren äußeren Rohr, das im wesentlichen glatt ausgebildet ist, überzogen, so daß sich das Kabelschutzrohr für die Handhabung als außen glattes Rohr darstellt, während es durch diese Ausbildung sowohl quer als auch längs gerichtet sehr steif ausgebildet ist. Es kann daher hohen Belastungen Stand halten und weist darüber hinaus thermo-isolierende Eigenschaften auf.

Bei der Herstellung wird das Kabelschutzrohr vorzugsweise auf Haspeln in Längen von mehr als 500 m aufgehaspelt.

Die Erfindung wird nachstehend anhand eines Ausführungsbeispiels näher erläutert.

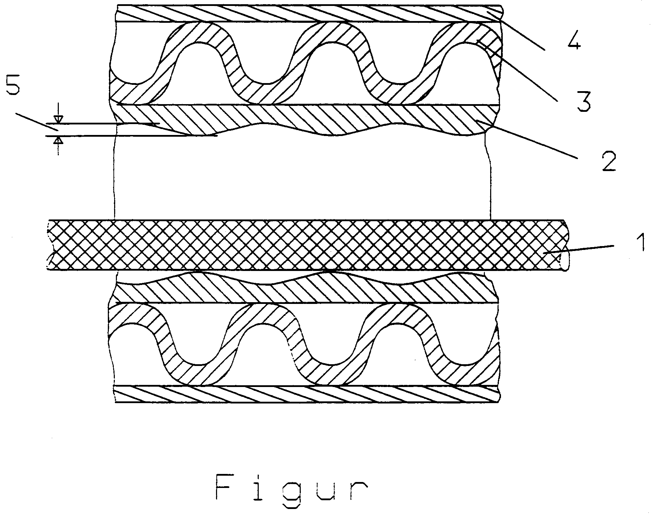

Die einzige Figur zeigt einen Schnitt durch ein Kabelschutzrohr nach der Erfindung, das dreischichtig aufgebaut ist. Im Inneren des Rohrs befindet sich ein Lichtleiterkabel 1, das mit einer Polyethylen-Kunststoffschicht ummantelt ist. Das Lichtleiterkabel 1 liegt auf den Erhöhungen des Innenrohres 2 auf. Es ergibt sich damit lediglich eine punktuelle Auflage des Kabels auf dem Innenrohr. Aus physikalischen Gründen wird die Reibung zwischen Kabel 1 und Innenrohr 2 dadurch zwar nicht unmittelbar verringert, jedoch führt die punktuelle Auflage des Kabels zu einem erhöhten Druck auf die Berührstellen des Innenrohres 2, so daß bei hoher Gleitgeschwindigkeit durch Materialpaarung zwischen einzuziehendem Kabel und Innenrohr 2 eine Erweichung der punktuellen Auflagestellen verursacht wird, deren Reibkoeffizient dadurch herabgesetzt wird. Ferner bilden sich bei dem üblicherweise mit Druckluft durchgeführten Einziehen des Kabels

Luftgeschwindigkeitsveränderungen zwischen Wellenberg und Wellental des Innenrohres 2, so daß auf den Erhebungen des Innenrohres 2 eine größere Luftgeschwindigkeit herrscht als in den Vertiefungen, in denen sich Luftwirbel ausbilden können. Dies führt dazu, daß bis zu einem gewissen Grade Luftgleitschichten auf den Erhebungen des Innenrohres 2 auftreten, die zur Verringerung der Reibung beitragen.

Das Innenrohr 2 ist insbesondere mit variabler Wandstärke ausgebildet. Bei seiner Extrusion aus einem Kunststoff-Spritzkopf wird dazu entweder der Volumenfluß des Spritzkopfes varriert, oder der Düsenaustrittsspalt wird kontinuierlich in seiner Größe verändert. Gleichwohl bleibt das Rohr im wesentlichen geradzylindrisch und damit längssteif. Die Art der Veränderung, beispielsweise eine sinusförmige Veränderung, bestimmt das Profil der innenseitigen Profilierung des Rohres 2. Als besonders vorteilhaft hat sich eine sinusförmige Wellung erwiesen.

Das Innenrohr 2 ist mit einem Wellrohr 3 überzogen, mit dem es an den inneren Wellenrücken des Wellrohres 3 verschweißt ist. Die Rohre 2 und 3 werden vorzugsweise gleichzeitig durch einen Zweifach-Spritzkopf hergestellt. Im Anschluß an die Düsenaustrittöffnung des Wellrohres 3 erfolgt die Wellung dieses Rohres durch mit dem austretenden Kunststoffstrom mitwandernde Formhälften.

Das so erzeugte Doppelwandrohr weist eine äußere Profilierung auf, die ein besonders gutes Einbinden in den Boden ermöglicht.

In vielen Fällen ist es jedoch gewünscht, daß das Kabelschutzrohr als außen glattes Rohr ausgebildet ist. Hierzu wird das doppelwandige aus den Rohren 2 und 3 bestehende Rohr durch einen weiteren Spritzkopf noch mit einem äußeren, glatten und geradzylindrischen Rohr 4 versehen. Das Ergebnis ist ein sehr längssteifes und quersteifes Rohr, das erhebliche Festigkeit aufweist und das durch die Wellrohrausbildung thermisch isolierende Eigenschaften aufweist. Es läßt sich daher insbesondere auch für Zwecke einsetzen, in denen ein einzuziehendes Kabel zur Verringerung seines elektrischen Widerstandes zu kühlen ist.

### Bezugszeichenliste

- 1: Kabel
- 2: Innenrohr
- 3: Wellrohr
- 4: Außenrohr
- 5: Abstand

## Patentansprüche

1. Kabelschutzrohr zur Aufnahme von kunststoffummantelten Kabeln oder Lichtleitern (1), das aus Kunststoff bestehend eine innenseitige Querprofilierung aufweist, dadurch gekennzeichnet, daß das aus HD-Polyethylen bestehende Rohr als in Längsrichtung steifes und im wesentlichen geradzylindrisches Rohr (2) ausgebildet ist, daß die Rippenhöhe der inneren Querprofilierung 0,2 bis 2 mm beträgt und daß das Rohr durch ein äußeres zweites als Wellrohr ausgebildetes Rohr (3) umfaßt ist.

2. Kabelschutzrohr nach Anspruch 1, dadurch gekennzeichnet, daß die Wandstärke des Innenrohres (2) in Längsrichtung wellenförmig variabel ausgebildet ist.

3. Kabelschutzrohr nach Anspruch 1 oder 2, dadurch gekennzeichnet, daß der axiale Wellenabstand der Rippen beim Innenrohr (2) dem Wellenabstand beim Außenrohr (3) entspricht.

4. Kabelschutzrohr nach Anspruch 3, dadurch gekennzeichnet, daß ein nach innen gerichteter Wellenberg des Innenrohres (2) mit einem nach innen gerichteten Wellenberg des äußeren Rohres (3) zusammenfällt.

5. Kabelschutzrohr nach Anspruch 3, dadurch gekennzeichnet, daß ein nach innen gerichteter Wellenberg des Innenrohres (2) mit einem Zwischenraum zwischen den nach außen gerichteten Wellenbergen des äußeren Rohres (3) zusammenfällt.

6. Kabelschutzrohr nach einem oder mehreren der Ansprüche 1 - 5, dadurch gekennzeichnet, daß die Rohre (2, 3) durch Koextrusion aus einem Zweifach-Spritzkopf hergestellt sind.

7. Kabelschutzrohr nach einem oder mehreren der vorhergehenden Ansprüche, dadurch gekennzeichnet, daß das äußere Rohr (3) mit einem dritten im wesentlichen glatten Rohr (4) überzogen ist.
